# EUROPÄISCHE PATENTSCHRIFT

(11) **EP 1 886 392 B1**
(45) Veröffentlichungstag und Bekanntmachung des Hinweises auf die Patenterteilung: **11.01.2012**
(21) Anmeldenummer: 05753687.2
(22) Anmeldetag: 02.06.2005
(51) Int. Cl.: H02H 7/26, H02H 3/05, H02J 3/36

(54) **VERFAHREN ZUM VERMEIDEN EINER MESSFEHLERBEDINGTEN UNGEWOLLTEN SCHUTZAUSLÖSUNG INNERHALB EINES SCHUTZSYTEMS EINER HGÜ-ANLAGE**
METHOD FOR AVOIDING UNDESIRED, MEASUREMENT ERROR-INDUCED PROTECTIVE TRIPPING WITHIN A PROTECTION SYSTEM OF AN HVDC TRANSMISSION SYSTEM
PROCEDE POUR EVITER UN DECLENCHEMENT DE PROTECTION INVOLONTAIRE DU A UNE ERREUR DE MESURE DANS UN SYSTEME DE PROTECTION D'UNE INSTALLATION DE TRANSMISSION H.T. DU COURANT CONTINU

(43) Veröffentlichungstag der Anmeldung: 13.02.2008
(73) Patentinhaber: SIEMENS AKTIENGESELLSCHAFT, 80333 München (DE)
(72) Erfinder: PRIEBE, Torsten, 91054 Erlangen (DE); STRAUSS, John-William, 91341 Rötenbach (DE)
(86) Internationale Anmeldenummer: PCT/DE2005/001024
(87) Internationale Veröffentlichungsnummer: WO 2006/128397

(56) Entgegenhaltungen:
- FR-A- 2 694 635
- US-A- 5 737 166
- KIRRMANN H ED - INSTITUTE OF ELECTRICAL AND ELECTRONICS ENGINEERS: "FAULT-TOLERANT ISSUES IN THE DESIGN OF A HIGHLY AVAILABLE HIGH-SPEED CONTROLLER FOR HVDC TRANSMISSION" INTERNATIONAL SYMPOSIUM ON FAULT TOLERANT COMPUTING SYSTEMS. (FTCS). VIENNA, JULY 1 - 4, 1986, INTERNATIONAL SYMPOSIUM ON FAULT TOLERANT COMPUTING SYSTEMS. (FTCS). SYSTEMS, NEW YORK, IEEE, US, Bd. SYMP. 16, Juli 1986 (1986-07), Seiten 184-189, XP000757394
- YU JIANGGUO ET AL: "Reliable control and protection system for the tian - guang HVDC transmission project" POWER SYSTEM TECHNOLOGY, 2002. PROCEEDINGS. POWERCON 2002. INTERNATIONAL CONFERENCE ON, PISCATAWAY, NJ, USA,IEEE, Bd. 2, 13. Oktober 2002 (2002-10-13), Seiten 688-695, XP010614842 ISBN: 0-7803-7459-2

## Beschreibung

Die Erfindung betrifft ein Verfahren zum Vermeiden einer messfehlerbedingten ungewollten Schutzauslösung innerhalb eines Schutzsystems einer HGÜ-Anlage, bei dem Zustandsgrößen von Bauteilen der HGÜ-Anlage durch erste Messgeräte unter Gewinnung eines ersten Messwertsatzes und durch weitere Messgeräte, die redundant zu den ersten Messgeräten ausgelegt sind, unter Gewinnung weiterer Messwertsätze erfasst werden, der erste Messwertsatz und die weiteren Messwertsätze einer Schutzeinheit zugeführt werden, wobei die Schutzeinheit den ersten Messwertsatz auf das Vorliegen einer Schutzauslösegefahr mittels einer internen Logik überprüft, und bei Vorliegen einer Schutzauslösegefahr einen der weiteren Messwertsätze auf das Vorliegen von Umschaltbedingungen hin überprüft und bei Vorliegen der Umschaltbedingungen auf diesen weiteren Messwertesatz umschaltet und diesen weiteren Messwertesatz auf das Vorliegen einer Schutzauslösegefahr hin überprüft.

Ein solches Verfahren ist aus Kirrmann, H. ED. - IEEE: "Fault-tolerant issues in the design of highly available high-speed controller for HVDC transmission", International Symposium on Fault Tolerant Computing Systems (FTCS), New York, US, Bd. SYMP. 16. Juli 1986, Seiten 184 - 189, bereits bekannt. Dort ist ein Verfahren für eine so genannte Hochspannungsgleichstromübertragungsanlage beschrieben, bei dem Zustandsgrößen von Bauteilen einer HGÜ-Anlage durch erste Messgeräte erfasst werden. Hierbei ist jedes Messgerät doppelt ausgeführt, so dass ein redundanter Datenwert erzeugt wird. Die beiden Messwerte werden jeweils einer Schutzeinheit zugeführt, wobei jeder Messwert auf das Vorliegen einer Schutzauslösegefahr überprüft wird. Liegt eine Auslösegefahr vor, wird eine Warnmeldung erzeugt. Bei Vorliegen der Umschaltbedingungen wird auf den zweiten Messwert umgeschaltet, der dann seinerseits auf das Vorliegen einer Schutzauslösegefahr hin überprüft wird. Werden die Bedingungen für eine Schutzauslösung von beiden Messwerten erfüllt, werden geeignete Schutzmaßnahmen ergriffen.

Bei anderen bekannten Verfahren basiert die Vermeidung von Fehlauslösungen auf einer so genannten Zwei- aus drei Auswahl. Dies bedeutet, dass mindestens zwei der drei Schutzsysteme ansprechen müssen um eine Abschaltung der Anlage auszulösen. Aufgrund der geringen Wahrscheinlichkeit von zeitgleichen Messwertfehlern ist meist nur ein Schutzsystem betroffen. Somit führt eine einzelne Fehlauslösung eines einzelnen Schutzsystems nicht zur Abschaltung der Anlage. Die Nachteile dieses Zwei-aus-drei- Verfahrens liegen auf der Hand. So sind alle Messstellen und Schutzgeräte in dreifacher Ausführung in der Anlage zu implementieren. Dies führt zu hohen Kosten aufgrund der aufwendigen Verkabelung und der hohen Anzahl von Geräten.

Aufgabe der Erfindung ist es, ein Verfahren der eingangs genannten Art bereitzustellen, das einfach durchführbar und kostengünstig ist.

Die Erfindung löst diese Aufgabe dadurch, dass der erste Messwertsatz und die weiteren Messwertsätze jeweils durch eine zeitliche Aneinanderreihung verschiedener Messwerte mittels Vorverarbeitungsmitteln erzeugt werden, die den ersten Messwertesatz und den weiteren Messwertesatz jeweils zugeordnet sind.

Gemäß der vorliegenden Erfindung wird kurz vor der Ausgabe des eigentlichen Auslösebefehls, mit dem bestimmte zweckmäßige Sicherheitseinstellungen, wie beispielsweise das Öffnen eines Leistungsschalters, das Nichtzünden von Thyristorventilen und dergleichen, durchgeführt werden, das Auslösen einer Auslösegefahr festgestellt. Das Feststellen einer Auslösegefahr kann grundsätzlich auf beliebige Weise erfolgen. Zweckmäßige Beispiele der Bestimmung einer Auslösegefahr werden nachfolgend beschrieben. Grundsätzlich wird die Auslösegefahr anhand des ersten Messwertesatzes festgestellt, der auf Grundlage der Messwerte mehrerer Messgeräte erzeugt wurde. Dabei ist jedes Messgerät redundant ausgelegt. Dies bedeutet, dass für jedes Messgerät ein weiteres Messgerät vorhanden ist, das in der Lage ist, das erste Messgerät in dessen Fehlerfall zu ersetzen. Um ein unnötiges Auslösen von Schutzmaßnahmen zu vermeiden, wird erfindungsgemäß festgestellt, ob die Auslösegefahr lediglich aufgrund eines Fehlers eines der Messgeräte oder einer der Verbindungskanäle festgestellt wurde. Aus diesem Grunde überprüft die Schutzeinheit nach dem Feststellen der Auslösegefahr, also vor dem Durchführen der Schutzmaßnahmen, einen der weiteren Messwertsätze auf das Vorliegen von Umschaltbedingungen. Umschaltbedingungen liegen dann vor, wenn der betrachtete weitere Messwertesatz Messwerte aufweist, die auf einen Normalbetrieb der HGÜ-Anlage schließen lassen. Liegen solche Umschaltbedingungen vor wird auf einen Messfehler geschlossen. Die Schutzeinheit schaltet auf den weiteren Messwertesatz um. Mit anderen Worten, überprüft die Schutzeinheit den weiteren Messwertesatz auf das Vorliegen einer Schutzauslösegefahr und letztendlich auch auf das Vorliegen einer Schutzauslösung.

Erfindungsgemäß werden Messwertsätze durch zeitliche Aneinanderreihung von Einzelmesswerten erzeugt. Dies vereinfacht das erfindungsgemäße Verfahren.

Vorteilhafterweise schaltet die Schutzauslöseeinheit auf den weiteren Messwertesatz um, den die Steuerungseinheit ihrer Regelung zugrunde liegt. Diese zweckmäßige Weiterentwicklung des erfindungsgemäßen Verfahrens ist immer dann realisiert, wenn neben dem ersten Messwertesatz lediglich ein weiterer Messwertesatz vorgesehen ist. Auf diese Weise werden beträchtliche Kosten eingespart. In der Praxis werden daher nahezu ausschließlich zwei gleiche Messwertsätze erzeugt.

Vorteilhafterweise führt die Schutzeinheit nach einer einstellbaren zuvor festgelegten Umschaltdauer das Überprüfen der Schutzauslösegefahr wieder anhand des ersten Messwertesatzes durch. Gemäß dieser Weiterentwicklung schaltet die Schutzeinheit nach Ablauf der Umschaltdauer wieder auf den ersten Messwertesatz zurück. Liegt lediglich ein temporärer Fehler des ersten Messwertsystems vor, kann die Schutzüberprüfung wieder anhand des ersten Messwertesatzes durchgeführt werden. Der Betrieb der HGÜ-Anlage erfolgt dann im Normalbetrieb. Besteht der Messfehler nach Ablauf der Umschaltdauer auch weiterhin fort, kommt es zum erneuten Feststellen einer Schutzauslösegefahr, so dass sich der beschriebene Vorgang wiederholt.

Gemäß einer diesbezüglich zweckmäßigen Weiterentwicklung unterbleibt das Zurückschalten der Überprüfung auf den ersten Messwertesatz nach einer zuvor bestimmten Anzahl erfolgloser Versuche. In diesem Falle wird eine Fehlermeldung an einen Nutzer übersandt, der die notwendigen Wartungsschritte im Zusammenhang mit den Messgeräten und den Verbindungskanälen des ersten Messwertesatzes durchführt.

Zweckmäßigerweise umfasst das Überprüfen des Vorliegens der Schutzauslösegefahr ein Aufsummieren von Messwerten über eine bestimmte Zeitdauer hinweg, wobei die Schutzauslösegefahr dann besteht, wenn der prozentuale Anteil eines Auslöseschwellenwertes durch die Summe der aufsummierten Messwerte überschritten wird. Gemäß dieser vorteilhaften Weiterentwicklung der Erfindung wird die Schutzauslösegefahr durch das Integrieren bestimmter Messwerte des ersten beziehungsweise des weiteren Messwertesatzes festgestellt. Strebt die Summe oder mit anderen Worten das Integral der untersuchten Messwerte innerhalb der bestimmten Zeitdauer auf den Auslöseschwellenwert zu, wird die Schutzauslösegefahr zeitlich kurz vor Erreichen dieses Auslöseschwellenwertes festgestellt.

Abweichend davon wird die Schutzauslösegefahr dann festgestellt, wenn Messwerte des jeweils untersuchten Messwertesatzes einen der Schutzeinheit vorgegebenen Auslöseschwellenwert über eine vorgegebene Vorwarnungszeitdauer hinweg fortwährend überschreiten. Zweckmäßigerweise ist die Vorwarnungszeitdauer kürzer als die Auslösezeitdauer, nach der es bei andauerndem fortwährendem Überschreiten des Auslöseschwellenwertes zum Auslösen der Schutzmaßnahmen kommt.

Gemäß einem bevorzugten Ausführungsbeispiel sind die Schutzeinheiten und die Regelungseinheiten redundant ausgelegt. Durch die redundante Auslegung wird die Betriebssicherheit der HGÜ-Anlage erhöht.

Vorteilhafterweise beträgt die Umschaltdauer zwischen 1 und 10 Sekunden. In der Praxis hat sich eine Umschaltdauer in diesem Bereich als besonders zweckmäßig erwiesen.

Gemäß einer weiteren vorteilhaften Ausgestaltung der Erfindung umfasst das Überprüfen der Umschaltbedingungen das Feststellen der Abweichung von Messwerten untereinander, die in einem Gleichstromkreis der HGÜ-Anlage fließenden Gleichströmen und/oder zweckmäßig umgerechneten Wechselströmen entsprechen, wobei die Umschaltbedingungen vorliegen, wenn die Abweichung einen Umschaltschwellenwert unterschreitet. Gemäß dieser zweckmäßigen Weiterentwicklung der Erfindung werden zum Feststellen der Umschaltbedingung auf die Gleichströme und/oder auf zweckmäßig umgerechnete Wechselströme abgestellt, die im Gleichstromkreis beziehungsweise in den Wechselstromanschlüssen der Umrichter fließen. Dabei wird davon ausgegangen, dass im Fehlerfall auffällig hohe Abweichungen unter den Messwerten innerhalb eines kurzen Zeitraumes auftreten, während im Normalbetrieb eine nur geringfügige Abweichung bedingt durch Messungenauigkeiten zwischen den Messwerten der Ströme festzustellen ist. Liegt daher in der HGÜ-Anlage als solcher kein Fehler vor und ist lediglich ein Messwertfehler zu verzeichnen, so wird die Auswertung der Messwerte nur in einem der Messwertsätze zu einer Abweichung führen. Aufgrund dieser Information wird die Umschaltung auf den redundanten Messwertsatz des betroffenen Schutzsystems ermöglicht. Bei einem Fehler sind im Allgemeinen auf allen Messwertsätzen Abweichungen in den gemessenen Werten zu erwarten, die den Umschaltschwellenwert überschreiten. In einem bevorzugten Ausführungsbeispiel wird die Abweichung durch Bestimmen des Maximums und des Minimums der Gleichstromwerte unter anschließender Differenzbildung zwischen Maximum und Minimum berechnet. Entsprechendes gilt bei den zweckmäßig umgerechneten Wechselströmen. Die zweckmäßige Umrechnung umfasst beispielsweise durch die Berechnung eines Gleichstromes aus den in den Wechselstromanschlüssen zwischen Transformator und Umrichter der HGÜ-Anlage gemessenen Wechselströmen.

Vorteilhafterweise erfolgt bei Nichtvorliegen der Umschaltbedingungen die Schutzauslösung. Ergibt die Prüfung der Umschaltbedingungen beispielsweise durch eine wie zuvor ermittelte Abweichung zwischen den jeweiligen Gleichstromwerten und/oder den zweckmäßig umgerechneten Wechselstromwerten, dass die HGÜ-Anlage nicht mehr im Normalbetrieb arbeitet, wird die jeweils zweckmäßige Schutzmaßnahme ohne Umschaltung auf den redundanten Messwertsatz ergriffen. Dabei kann es sich beispielsweise das Nichtzünden von Thyristorventilen oder dergleichen handeln, so dass die Leistungsübertragung abgebrochen wird. Ferner ist das Auslösen von Leistungsschaltern oder dergleichen im Rahmen der Erfindung möglich.

Weitere zweckmäßige Ausgestaltungen und Vorteile sind Gegenstand der nachfolgenden Beschreibung von Ausführungsbeispielen der Erfindung unter Bezug auf die Figuren der Zeichnung, wobei gleiche Bezugszeichen auf gleiche Bauteile verweisen und wobei
- Figur 1: den Aufbau des Schutz- und Regelungssystems einer HGÜ-Anlage schematisch verdeutlicht und
- Figur 2: eine schematische Darstellung eines Ausführungsbeispiels der Erfindung zeigen.

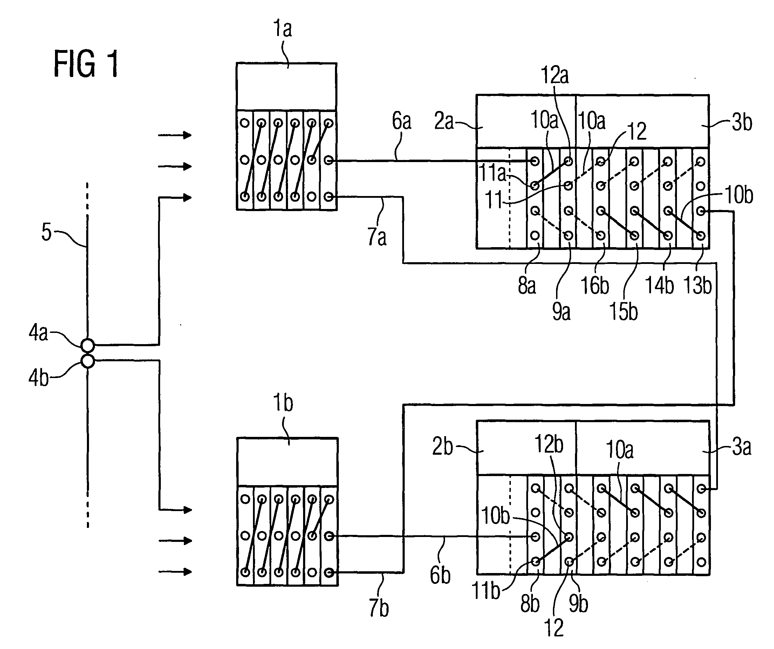

Figur 1 zeigt eine schematische Darstellung eines Schutz- und Regelungssystems einer HGÜ-Anlage zur Durchführung der Erfindung. In Figur 1 sind redundant ausgelegte Vorverarbeitungsmittel 1a, 1b sowie ebenfalls redundant ausgelegte Regelungseinheiten 2a, 2b sowie Schutzeinheiten 3a und 3b gezeigt. Die Vorverarbeitungsmittel 1a und 1b sind mit einer Reihe von jeweils redundant ausgelegten Messgeräten verbunden, von denen in Figur 1 lediglich redundant ausgelegte Stromwandler 4a und 4b gezeigt sind. Die Stromwandler 4a, 4b weisen eine gemeinsame Primärwicklung auf und erzeugen sekundärseitig Spannungen im Niederspannungsbereich, die einem über eine Sammelschiene 5 der HGÜ-Anlage fließenden Wechselstrom proportional sind. Weitere Messwerte der Messwertsätze betreffen Ströme und Spannungen anderer Bauteile der HGÜ-Anlage auf deren Wechselstromseite und Ströme und Spannungen im nicht gezeigten Gleichstromkreis, wobei die Messwerte den Vorverarbeitungsmitteln 1a, 1b auch in Form optischer digitaler Signale übermittelt werden können.

Die Messwerte der redundant ausgelegten Messgeräte werden jeweils den zugeordneten redundanten Vorverarbeitungsmitteln zugeführt. Diese sind mit geeigneten Mitteln, beispielsweise Messwertwandler zum Überführen der Niederspannungswerte in geringere Spannungen, optoelektronischen Wandlern, Abtastmitteln und Analog/Digitalwandlern ausgerüstet ist, so dass das Vorverarbeitungsmittel 1a einen ersten Messwertesatz erzeugt, der die eingespeisten Messwerte mehrerer Messgeräte sowie einen Synchronisationstakt zur Synchronisation der weiteren Regelung und Steuerung umfasst. Das Vorverarbeitungsmittel 1b erzeugt einen entsprechenden im Normalbetrieb zum ersten Messwertesatz im Wesentlichen inhaltsgleichen zweiten Messwertesatz als weiteren Messwertesatz.

Der erste Messwertesatz, also die zeitlich aufeinander folgenden Messwerte aller ersten Messgeräte, wird über einen ersten Lichtwellenleiter 6a an die erste Regelungseinheit 2a übertragen und über einen zweiten Lichtwellenleiter 7a der Schutzeinheit 3a zugeführt. Der zweite Messwertesatz wird der Regelungseinheit 2b über den Lichtwellenleiter 6b zugeführt beziehungsweise über den Lichtwellenleiter 7b der Schutzeinheit 3b. Im Normalbetrieb führen die Regelungseinheit 2a und die davon getrennte Schutzeinheit 3a eine Regelung beziehungsweise Schutzüberwachung auf der Grundlage des ersten Messwertesatzes durch, der durch die Vorverarbeitungsmittel 1a bereitgestellt wird. Die Regelungseinheit 2b sowie die unten im Bild angeordnete Schutzeinheit 3b führen im Normalbetrieb die Regelung beziehungsweise den Schutz der HGÜ-Anlage auf der Grundlage des zweiten Messwertesatzes durch, der von dem Vorverarbeitungsmittel 1b erzeugt wird. Die Regelungseinheit 2b und die Schutzeinheit 3a sind jeweils redundant zu der Regelungseinheit 2a beziehungsweise der Schutzeinheit 3b ausgebildet, welche im Normalbetrieb die Regelung und den Schutz der HGÜ-Anlage übernehmen.

Wird eine Störung der Regelungseinheit 2a oder der Schutzeinheit 3b festgestellt, kommt es zum Umschalten auf die Regelungseinheit 2b und zum Blockieren der Schutzeinheit 3b. Schutzeinheit 3a und 3b sind bei Normalbetrieb gleichzeitig in Betrieb. Die Voraussetzungen und Bedingungen für ein solches Umschalten oder Blockieren werden als bekannt vorausgesetzt.

Die Regelungseinheiten 2a beziehungsweise 2b umfassen Regelungseinschübe 8a, 9a beziehungsweise 8b und 9b. Jeder Regelungseinschub Einschub 8a, 8b, 9a, 9b ist zur Regelung eines oder mehrerer bestimmter aktiver Bauteile der HGÜ-Anlage eingerichtet. Durch eine optische Lichtwellenleiterbrücke 10a ist der Ausgang 11a des Regelungseinschubes 8a mit dem Eingang 12a des Regelungseinschubes 9a verbunden. Entsprechendes gilt für den Ausgang 11b des Regelungseinschubes 8b und den Eingang 12b des Regelungseinschubes 8b. Die Schutzeinheit 3b ist entsprechend aus Schutzeinschüben 13b, 14b, 15b und 16b zusammengesetzt, deren Aus- und Eingänge wieder durch Lichtwellenleiterbrücken 10b und 10a miteinander verbunden sind.

Im Normalbetrieb ist für die Regelungseinheit 2a der erste Messwertesatz des Vorverarbeitungsmittels 1a der bevorzugte Messwertesatz. Mit anderen Worten führt die Regelungseinheit 2a die Regelung im Normalbetrieb auf der Grundlage des ersten Messwertesatzes durch. Aus diesem Grunde ist der erste Messwertesatz zwischen den Regelungseinschüben 8a und 9a der Regelungseinheit 2a mit durchgezogenen Linien gezeigt. Die Schutzfunktion der Schutzeinheit 3b erfolgt jedoch im Normalbetrieb auf der Basis des zweiten Messwertesatzes, der von den Vorverarbeitungsmitteln 1b erzeugt wird. Um der Schutzeinheit 3b jedoch zusätzlich auch den ersten Messwertesatz zur Verfügung zu stellen, ist der Ausgang 11 des Regelungseinschubes 9a der Regelungseinheit 2a mit dem Eingang 12 des Schutzeinschubes 16b der Schutzeinheit 3b mittels einer Lichtwellenleiterbrücke 10a verbunden, die jedoch in Figur 1 mit unterbrochenen Linien gezeigt ist, um anzudeuten, dass diese einen Messwertesatz überträgt, der nur zum Ersatz des aktiven Messwertsatzes im Fehlerfall dient. Entsprechendes gilt für die Regelungseinheit 2b und die Schutzeinheit 3a, die ebenfalls mit durchgezogenen und unterbrochenen Linien verdeutlichte Lichtwellenleiterbrücken 10a aufweisen.

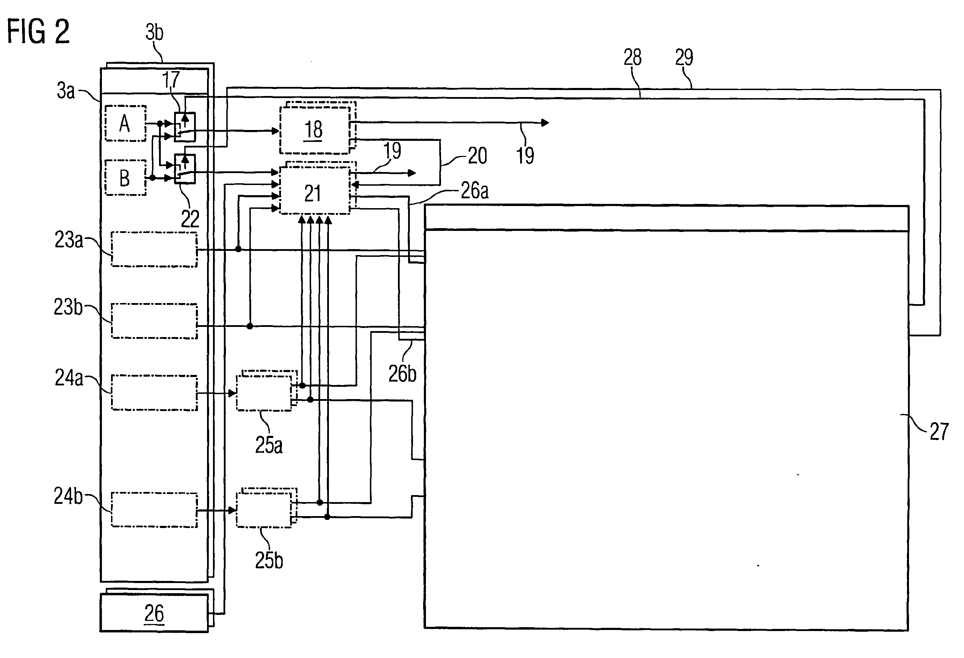

Figur 2 zeigt schematisch ein Ausführungsbeispiel der vorliegenden Erfindung. Die redundanten Regelungseinheiten sind durch perspektivisch versetzte Funktionskästen 3a und 3b gezeigt. Im Folgenden wird ausschließlich auf das Schutzgerät 3a Bezug genommen, wobei jedoch darauf hingewiesen sein soll, dass das Schutzgerät 3b entsprechend ausgestaltet ist.

Das Schutzgerät 3a verfügt über ein Schutzfunktionsumstellmittel 17, mit dem eine Auswahl unter dem ersten Messwertesatz A und dem zweiten Messwertesatz B ermöglicht ist. Der durch das Schutzfunktionsumstellmittel 17 ausgewählte Messwertesatz wird einer Schutzlogik 18 zugeführt. Im Normalbetrieb führt die Schutzlogik 18 die Überprüfung der Auslösebedingung auf Grundlage des ersten Messwertesatzes A durch. In dem beschriebenen Beispiel liegt eine Auslösebedingung dann vor, wenn ein Messwert des ersten Messwertesatzes über eine Zeitdauer von 6 Millisekunden hinweg einen parametrierbaren Auslöseschwellenwert überschreitet. Drei Millisekunden vor dem Auslösen der Schutzfunktion durch die Anweisung 19 stellt die Schutzlogik 18 eine Auslösegefahr fest und gibt eine entsprechende Vorwarnanweisung 20 an eine Auslösegefahrroutine 21. Die Auslösegefahrroutine 21 überprüft nun das Vorliegen von Umschaltbedingungen zum Umschalten auf den zweiten Messwertesatz B. Um der Auslösegefahrroutine 21 wahlweise den ersten Messwertesatz A oder den zweiten Messwertesatz B zur Verfügung zu stellen, sind Umstellmittel 22 vorgesehen. Weiterhin ist die Auslösegefahrroutine 21 mit einem ersten physikalischen Busprüfer 23a sowie einem zweiten physikalischen Busprüfer 23b verbunden, welche Informationen darüber bereitstellen, ob die Verbindungsleitungen für den jeweiligen Messwertesatz störungsfrei sind oder ob eine physikalische Störung vorliegt.

Weiterhin sind erste Messwertprüfer 24a und 25a beziehungsweise zweite Messwertprüfer 24a und 25b vorgesehen, die Angaben darüber enthalten, ob Fehler beim Aufbau des ersten Messwertesatzes beziehungsweise des zweiten Messwertesatzes vorliegen. Solche Fehler spiegeln beispielsweise Fehler bei der Abtastung von analogen Messwerten der Messgeräte, bei der Analog/Digitalumwandlung oder dergleichen wieder. Ferner wird die Auslösegefahrroutine 21 mit Statusinformationen 26 der gesamten HGÜ-Anlage versorgt.

Liegen keine Fehler auf Seiten der physikalischen Verbindungsleitungen vor, die durch die Busprüfer 23a beziehungsweise 23b festgestellt werden, und sind auch die Messwertesätze fehlerfrei ermittelt und vorverarbeitet worden, was durch Zugriff auf die Messdatenprüfer 24a und 25a beziehungsweise 24b und 25b feststellbar ist, überprüft die Auslösegefahrroutine 21 den zweiten Messwertesatz B auf das Vorliegen von Umschaltbedingungen. Diese sind dann gegeben, wenn der zweite Messwertesatz B Messwerte umfasst, die einem Normalbetrieb der HGÜ-Anlage entsprechen. Ein solcher Normalbetrieb wird in dem vorliegenden Ausführungsbeispiel durch Vergleich von Messwerten geprüft, die zum Gleichstrom des Gleichspannungskreises der HGÜ-Anlage proportional sind. Hierbei wird davon ausgegangen, dass die Abweichung der Strommesswerte bei Normalbetrieb gering ist. Kommt es zur Anregung einer Schutzfunktion durch Überschreiten beziehungsweise Unterschreiten von definierten Schwellwerten durch die Differenz des ermittelten maximalen und minimalen Gleichstromes, wird nach Ablauf einer definierten Verzögerungszeit, die der jeweiligen Schutzfunktion zugeordnet ist, die Auslösung des Schutzbefehls über Befehl 19 ausgegeben.

Im vorliegenden Fall erfolgt eine Umschaltung auf den zweiten Messwertesatz B wenige Millisekunden vor Ablauf der Verzögerungszeit. Nach fünf Sekunden wird auf den ersten Messwertesatz A zurückgeschaltet, so dass die Überprüfung auf das Vorliegen einer Auslösebedingung wieder anhand des ersten Messwertesatzes A erfolgt. Wird erneut eine Auslösegefahr festgestellt, wiederholt sich das zuvor beschriebene Umschaltverfahren. Nach einem weiterem Umschalten innerhalb von 65 Sekunden nach dem ersten Umschaltereignis wird die Überprüfung permanent auf der Basis des zweiten Messwertesatzes B durchgeführt und eine Fehlermeldung an den Betreiber der HGÜ-Anlage gesendet, so dass die entsprechenden Wartungsarbeiten an den Komponenten für das erste Messwertesystem durchgeführt werden können.

## Patentansprüche

1. Verfahren zum Vermeiden einer messfehlerbedingten ungewollten Schutzauslösung innerhalb eines Schutzsystems einer HGÜ-Anlage, bei dem
- Zustandsgrößen von Bauteilen der HGÜ-Anlage durch erste Messgeräte unter Gewinnung eines ersten Messwertsatzes (A) und durch weitere Messgeräte, die redundant zu den ersten Messgeräten ausgelegt sind, unter Gewinnung weiterer Messwertsätze (B) erfasst werden,
- der erste Messwertsatz (A) und die weiteren Messwertsätze (B) einer Schutzeinheit (3b, 3a) zugeführt werden, wobei die Schutzeinheit (3a) den ersten Messwertsatz (A) auf das Vorliegen einer Schutzauslösegefahr mittels einer internen Logik überprüft,
- und bei Vorliegen einer Schutzauslösegefahr einen der weiteren Messwertsätze (B) auf das Vorliegen von Umschaltbedingungen hin überprüft und bei Vorliegen der Umschaltbedingungen auf diesen weiteren Messwertesatz (B) umschaltet und diesen weiteren Messwertesatz (B) auf das Vorliegen einer Schutzauslösegefahr hin überprüft,
**dadurch gekennzeichnet, dass**
der erste Messwertsatz (A) und die weiteren Messwertsätze (B) jeweils durch eine zeitliche Aneinanderreihung verschiedener Messwerte mittels Vorverarbeitungsmitteln (1a, 1b) erzeugt werden, die den ersten Messwertesatz (A) und den weiteren Messwertesatz (B) jeweils zugeordnet sind.

2. Verfahren nach Anspruch 1,
**dadurch gekennzeichnet, dass**
die Schutzauslöseeinheit (3a) auf den weiteren Messwertesatz (B) umschaltet, den die Regelungseinheit (2b) ihrer Regelung zugrunde legt.

3. Verfahren nach einem der vorhergehenden Ansprüche,
**dadurch gekennzeichnet, dass** die Schutzeinheit (3a) nach einer einstellbaren Umschaltdauer das Überprüfen der Schutzauslösegefahr wieder anhand des ersten Messwertsatzes (A) durchführt.

4. Verfahren nach einem der vorhergehenden Ansprüche,
**dadurch gekennzeichnet, dass**
das Überprüfen des Vorliegens der Schutzauslösegefahr ein Aufsummieren von Messwerten des jeweiligen Messwertesatzes (A, B) über eine bestimmte Zeitdauer hinweg umfasst, wobei die Schutzauslösegefahr dann besteht, wenn der prozentuale Anteil eines Auslöseschwellenwertes durch die Summe der aufsummierten Messwerte überschritten wird.

5. Verfahren nach einem der Ansprüche 1 bis 3,
**dadurch gekennzeichnet, dass**
die Schutzauslösegefahr dann besteht, wenn Messwerte des jeweils untersuchten Messwertsatzes einen der Schutzeinheit vorgegebenen Auslöseschwellenwert über eine vorgegebene Vorwarnungszeitdauer hinweg fortwährend überschreiten.

6. Verfahren nach einem der vorhergehenden Ansprüche,
**dadurch gekennzeichnet, dass**
die Schutzeinheit (3a, 3b) und die Regelungseinheit (2a, 2b) redundant ausgelegt sind.

7. Verfahren nach Anspruch 3,
**dadurch gekennzeichnet, dass**
die Umschaltdauer zwischen 1 und 10 Sekunden beträgt.

8. Verfahren nach einem der vorhergehenden Ansprüche,
**dadurch gekennzeichnet, dass**
das Überprüfen der Umschaltbedingungen das Feststellen der Abweichung von Messwerten untereinander umfasst, die in einem Gleichstromkreis der HGÜ-Anlage fließenden Gleichströmen und/oder zweckmäßig umgerechneten Wechselströmen entsprechen, wobei die Umschaltbedingungen vorliegen, wenn die Abweichung einen Umschaltschwellenwert unterschreitet.

9. Verfahren nach einem der vorhergehenden Ansprüche,
**dadurch gekennzeichnet, dass**
bei Nichtvorliegen der Umschaltbedingungen die Schutzauslösung erfolgt.

10. Verfahren nach Anspruch 1,
**dadurch gekennzeichnet, dass**
die Vorverarbeitungsmittel (1a, 1b) den ersten Messwertesatz (A) und die weiteren Messwertesätze (B) jeweils mit einem allen Messwerten des jeweiligen Messwertesatzes gemeinsamen Synchronisationstakt versehen.

## Claims

1. Method for avoidance of inadvertent protective tripping as a result of measurement errors within a protection system for an HVDC transmission installation, in which
- state variables of components of the HVDC transmission installation are recorded by first instruments with a first measured value set (A) being obtained, and by further instruments which are designed to be redundant with respect to the first instruments, with further measured value sets (B) being obtained,
- the first measured value set (A) and the further measured value sets (B) are supplied to a protection unit (3b, 3a) with the protection unit (3a) checking the first measured value set (A) for the presence of any risk of protective tripping, by means of internal logic,
- and, if there is a risk of protective tripping, checks one of the further measured value sets (B) for the presence of switching conditions and, if switching conditions are present, switches to this further measured value set (B) and checks this further measured value set (B) for the presence of a risk of protective tripping
**characterized in that**
the first measured value set (A) and the further measured value sets (B) are each produced by arranging different measured values in a time sequence by means of preprocessing means (1a, 1b) which are respectively associated with the first measured value set (A) and the further measured value set (B).

2. Method according to Claim 1,
**characterized in that**
the protection tripping unit (3a) switches to the further measured value set (B) which is used as the basis for control of the control unit (2b).

3. Method according to one of the preceding claims,
**characterized in that**
the protection unit (3a) checks for any risk of protective tripping once again on the basis of the first measured value set (A) after an adjustable switching time.

4. Method according to one of the preceding claims,
**characterized in that**
the check for the presence of the risk of protective tripping comprises addition of measured values from the respective measured value set (A, B) over a specific time period, with there being a risk of protective tripping when the sum of the added measured values exceeds the percentage component of a tripping threshold value.

5. Method according to one of Claims 1 to 3,
**characterized in that**
the risk of protective tripping exists when measured values in the respectively investigated measured value set continuously exceed a tripping threshold value, which is predetermined by the protection unit, over a predetermined pre-warning time period.

6. Method according to one of the preceding claims,
**characterized in that**
the protection unit (3a, 3b) and the control unit (2a, 2b) are of redundant design.

7. Method according to Claim 3,
**characterized in that**
the switching time is between one and ten seconds.

8. Method according to one of the preceding claims,
**characterized in that**
the check for the switching conditions comprises the detection of any discrepancy between measured values which correspond to direct currents flowing in a direct-current circuit in the HVDC transmission installation and/or expediently converted alternating currents, with the switching conditions occurring when the discrepancy is less than a switching threshold value.

9. Method according to one of the preceding claims,
**characterized in that**
protective tripping takes place if the switching conditions are not present.

10. Method according to Claim 10,
**characterized in that**
the preprocessing means (1a, 1b) respectively provide the first measured value set (A) and the further measured value sets (B) with a synchronization clock which is common to all the measured values in the respective measured value set.

## Revendications

1. Procédé pour éviter un déclenchement de protection intempestif dû à une erreur de mesure dans un système de protection d'une installation de transmission du courant continu en haute tension, dans lequel
- on relève des grandeurs d'état de composants de l'installation de transmission du courant en haute tension par des premiers appareils de mesure, en obtenant un premier jeu ( A ) de valeurs de mesure, et par d'autres appareils de mesure, qui sont redondants aux premiers appareils de mesure, en obtenant d'autres jeux (B) de valeurs de mesure,
- on envoie le premier jeu ( A ) de valeurs de mesure et les autres jeux ( B ) de valeurs de mesure à une unité ( 3b, 3a ) de protection, l'unité (3) de protection contrôlant, au moyen d'une logique interne, la présence d'un danger de déclenchement de protection dans le premier jeu ( A ) de valeurs de mesure,
- et, en présence d'un danger de déclenchement de protection, on contrôle la présence de conditions de commutation dans l'un des autres jeux ( B ) de valeurs de mesure et, en présence des conditions de commutation, on commute sur cet autre jeu ( B ) de valeurs de mesure et on contrôle la présence d'un danger de déclenchement de protection dans cet autre jeu ( B ) de valeurs de mesure,
**caractérisé en ce que** l'on produit le premier jeu ( A ) de valeurs de mesure et les autres jeux (B) de valeurs de mesure respectivement en mettant à la file dans le temps diverses valeurs de mesure à l'aide de moyens ( 1a, 1b) de prétraitement, qui sont associés respectivement au premier jeu ( A ) de valeurs de mesure et à l'autre jeu ( B ) de valeurs de mesure.

2. Procédé suivant la revendication 1,
**caractérisé en ce que**
on commute l'unité ( 3a ) de déclenchement de protection sur l'autre jeu ( B ) de valeurs de mesure que l'unité ( 2b ) de régulation met à la base de sa régulation.

3. Procédé suivant l'une des revendications précédentes,
**caractérisé en ce que**
l'unité ( 3) de protection effectue à nouveau, au moyen du premier jeu (A) de valeurs de mesure après une durée de commutation réglable, le contrôle du danger de déclenchement de protection.

4. Procédé suivant l'une des revendications précédentes,
**caractérisé en ce que**
le contrôle de la présence du danger de déclenchement de protection comprend le fait de sommer des valeurs de mesure du jeu ( A, B ) de valeurs de mesure respectives sur une durée déterminée, le danger de déclenchement de protection étant constitué si la proportion en pourcentage d'une valeur de seuil de déclenchement est dépassée par la somme des valeurs de mesure sommées.

5. Procédé suivant l'une des revendications 1 à 3,
**caractérisé en ce que** le danger de déclenchement de protection est constitué si des valeurs de mesure du jeu de valeurs de mesure étudié respectivement dépassent continuellement sur une durée d'avertissement préalable prescrite une valeur de seuil de déclenchement prescrite à l'unité de déclenchement.

6. Procédé suivant l'une des revendications précédentes,
**caractérisé en ce que**
l'unité ( 3a, 3b ) de protection et l'unité (2a, b) de régulation sont conçues de manière redondante.

7. Procédé suivant la revendication 3,
**caractérisé en ce que**
la durée de commutation est comprise entre 1 et 10 secondes.

8. Procédé suivant l'une des revendications précédentes,
**caractérisé en ce que**
le contrôle des conditions de commutation comprend la fixation de l'écart des valeurs de mesure, qui correspondent à des courants continus passant dans un circuit de courant continu de l'installation de transmission de courant continu en haute tension et/ou à des courants alternatifs recalculés à dessein, les conditions de commutation étant présentes, lorsque l'écart est inférieur à une valeur de seuil de commutation.

9. Procédé suivant l'une des revendications précédentes,
**caractérisé en ce que**
le déclenchement de protection s'effectue si les conditions de commutation ne sont pas présentes.

10. Procédé suivant la revendication 1,
**caractérisé en ce que**
les moyens ( 1a, 1b ) de prétraitement munissent le premier jeu (A) de valeurs de mesure et les autres jeux (B) de valeurs de mesure respectivement d'une horloge de synchronisation commune à toutes les valeurs de mesure du jeu de valeurs de mesure respectif.
